# EUROPEAN PATENT APPLICATION

(11) **EP 4 618 336 A1**
(43) Date of publication of application: **17.09.2025**
(21) Application number: 25164090.0
(22) Date of filing: 17.03.2025
(51) Int. Cl.: H02G 3/12, H02G 3/08

(54) **FLUSH-MOUNTED BOX FOR ELECTRICAL SYSTEMS**

(30) Priority: 15.03.2024 IT 202400005878
(71) Applicant: Vimar S.p.A., 36063 Marostica (VI) (IT)
(72) Inventor: MOCELLIN, Dario, 36061 Bassano del Grappa (VI) (IT); BERTOLLO, Michele, 36060 Pianezze (VI) (IT); MATTIELLO, Michele, 36023 LONGARE (VI) (IT)
(74) Representative: Locas, Davide

(57) **Abstract**

A flush-mounted box (1) for electrical systems intended for installation on panel walls, comprises a box-like body (2) that includes a perimeter wall (3) having a free front edge (5) opposed to a bottom edge (4), in said perimeter wall (3) there being provided at least one opening (9, 10). The flush-mounted box (1) further comprises at least one appendage (20) configured to be partially inserted into the opening (9, 10) and to protrude reversibly through it. There is also provided a front abutment (25A) to retain the box on the panel (26). The perimeter wall (3) of said box (1) is devoid of external perimeter flanging at said free edge (5), and the front abutment (25A) includes a screw (24) with enlarged head (25) fixable to the appendage (20).

## Description

The present invention relates to a flush-mounted box for electrical systems and the related fixing method.

Known flush-mounted boxes are normally used in electrical, civil or industrial systems for mounting inserts and/or for the connections of nodes of the system. Typically, these boxes are flush-mounted in the wall, obtaining an appropriate seat in the same. One of the most common uses is where the walls are made of slab-like panels, for example in wood or plasterboard and where the seats for these flush-mounted boxes are made with special tools, such as saws, cutters and in particular of the cup type, in the form of openings in the panels. In this context, the need is felt to improve the techniques for fixing the box in the aforementioned opening obtained on the panel.

According to a known technique, described in WO2019/097277, it is disclosed that such boxes can be retained between the two faces of a panel by means of a tightening made by movable appendages relative to the box on one side and by a perimeter edge of the side wall of the box on the opposite side. The appendages are provided with serrated tabs that engage in special seats on the side wall of the box in which a sprung tooth serves to unidirectionally retain the respective tab, in a way completely similar to what is done by traditional cable ties. Once the box is inserted, the tab is pulled by sliding it unidirectionally with respect to the tooth until the panel is tightened between the respective appendage and the protruding edge towards the outside of the perimeter wall. However, this system is not very efficient as it is necessary to cut the tabs once the wall fixing has been made.

A further system, in many ways like the one mentioned above, is described in GB2453201. This system also provides that the box is provided with a side wall with a perimeter edge projecting outwards, to act as a tightening stop to the movable appendage of the clamp system. In this case, there is provided an adjustment of the clamp system in two different positions depending on the thickness of the panel. However, this adjustment requires a relatively complex guide system and may be insufficient to meet the different installation needs.

Further solutions are described in US 2 759 621 A and FR 3 000 869 A1. The technical problem addressed and solved by this invention is to develop a flush-mounted box for electrical systems and its fixing method structurally and functionally designed to overcome, at least in part, one or more of the problems complained of with reference to the cited prior art. Within the scope of this technical problem, it is an object of the invention to realize a flush-mounted box, firmly fixable to the wall with a simple and effective tightening.

Another object of the invention is to develop a flush-mounted box structured so as to lend itself optimally to be applied versatilely on slab-like panel walls, as well as in other types of structures, such as coats, brick or concrete.

Another object of the invention is to make a flush-mounted box for electrical systems removable relatively easily following a first installation. An object of the present invention is also to make available to the technique a flush-mounted box that allows to improve the known solutions within the framework of a simple rational solution and with a rather low cost.

Not least object of the invention is to devise a competitive and effective method for fixing a flush-mounted box.

This problem is solved and at least some of these objects are achieved by the invention, in a first aspect thereof, by a flush-mounted box for electrical systems comprising a box-like body comprising a bottom and a perimeter wall having a free front edge opposed to an edge of said bottom.

In the perimeter wall there is provided at least one opening. The flush-mounted box further comprises at least one appendage configured to preferably protrude reversibly, at least in a box mounting position, through the at least one opening beyond the perimeter wall, so as to identify a dorsal abutment of the box on a panel.

Preferably, there is further provided a front abutment of said flush-mounted box on the panel, connected or connectable to said dorsal abutment, so as to retain the box on the panel.

Preferably the perimeter wall is devoid of external perimeter flanging at the free edge.

The front abutment preferably includes a screw with enlarged head. The at least one appendage is preferably arranged to receive a threaded section of the screw for the purpose of tightening the panel between the enlarged head of the screw and the at least one appendage.

It should be noted that the absence of flanging, together with the reversibility characteristic for the protruding configuration of the appendages, allows the box to be inserted frontally into the opening made on the panel, leaving it flush, or possibly slightly recessed, with respect to the front surface of the same.

In this way, the box can be adapted, at least within certain limits, to panels of different sizes, while still allowing quick and easy fixing by means of the screws that make the front abutment.

Based on a second aspect, the invention also refers to a method for mounting a flush-mounted box in a panel wall, the box comprising a box-like body in turn including a perimeter wall in which there is provided at least one opening.

The method preferably comprises removing from said box-like body or retracting within said box-like body at least one appendage.

Preferably the method provides for inserting the box-like body into an opening formed in a wall panel such that a free edge of the box-like body is aligned or recessed with respect to the surface of said panel.

Preferably, the method provides for projecting the at least one appendage through the opening beyond the perimeter wall in such a way as to identify the dorsal abutment for the box.

Preferably, the method provides for moving said box-like body in the direction of extraction from said opening until obtaining an abutment between said dorsal abutment and said panel.

The method preferably provides for fixing the at least one appendage to the panel by means of a screw in such a way as to identify the front abutment of the box.

The invention, as defined by each of the foregoing aspects, may have one or more of the following additional preferred features.

Preferably the flush-mounted box comprises a second opening and a third opening.

These features allow the installation of a flush-mounted box in an easy and reversible way.

Preferably said appendage and said at least one opening are configured in such a way that said appendage, when inserted in said at least one opening, protrudes beyond said perimeter wall entirely below said front free edge, in such a way as to abut a portion of the wall panel on said dorsal abutment.

In this way, the flush-mounted box can also be used in the case of panels of variable thickness since it is possible to abut the wall from behind, after the box has been inserted into the opening formed in the panel. Preferably the flush-mounted box comprises at least one pair of openings. These openings are spaced along the perimeter wall. These features allow to associate the box with the panel where access to it is more accessible. Preferably the openings are arranged on opposed sides of the box-like body.

Preferably, in the perimeter wall, there are provided two pairs of openings differently spaced from the free edge. In particular, the spacing allows to alternatively receive the corresponding appendage depending on the mounting thickness of the box. More precisely, the presence of two spaced openings allows the box to be installed on panels with different thicknesses, in particular in the case of a wall formed by double panels. Preferably the flush-mounted box comprises a pair of appendages. This feature allows the box to be associated with the panel in a more stable way.

Preferably each appendage comprises at least one lead-in seat, and even more preferably a plurality of lead-in seats, for the threaded section of the screw. These features allow the appendages, and therefore the box, to be reliably and versatilely associated with the panel.

Preferably, the lead-in seats are arranged on opposed sides of the appendices. Preferably the lead-in seats are bi-conical in shape with a common minor base.

Preferably the openings are counter-formed by male-female coupling with respect to the appendages. This feature allows to obtain an optimal coupling between appendages and respective openings.

Preferably the appendages have a wing, preferably arranged so as to abut against the perimeter wall when the corresponding appendage is inserted into the relative opening.

Preferably said appendages comprise a flat portion. Preferably said wing extends substantially perpendicular to said flat portion.

Preferably said appendages each comprise a single flat portion extending from said wing.

This feature allows the appendage to be inserted into the relative opening even in the case of panels of different thicknesses.

Preferably each wing comprises a pair of marginal portions folded and connected together. Preferably the marginal portions are shaped in such a way as to match the perimeter wall of the box-like body when the appendage is inserted into the relative opening.

This feature makes it possible to optimally abut the relative wing of the appendage to the perimeter wall and occlude the second opening, when the same appendage is inserted in the third opening, or at the third opening when the appendage is inserted in the second opening. In particular, this feature allows any free electrical terminals to access the flush-mounted box, thus isolating the content thereof.

Preferably, the box comprises a support member housed in a respective first opening arranged distal to the bottom edge. Preferably the box comprises a pair of support members housed in respective first openings spaced along the perimeter wall of the box-like body. Preferably each support member is configured to house closure means of the box. Preferably each support member is configured to house a box mounting member.

Preferably the support member comprises a main body ribbed by a pair of wings defining at one end a root. Preferably the root is configured to be interlockingly engaged in a respective first opening. Preferably the mounting member comprises a hole. These features allow additional instrumentation, such as a closure with an electrical outlet, to be installed reliably and versatilely on the free edge of the flush-mounted box.

Preferably each mounting member comprises a removable level.

Preferably, the mounting member comprises a plurality of abutments arranged in such a way as to allow the dimensioning of an opening on the panel to house the box-like body. Preferably the abutments are dome-shaped with a pointed terminal. These characteristics allow an installer to reproduce the optimal distances for the installation and panel tightening of the box, that is, identifying the optimal points in which to insert the relative screws that can be coupled with the appendages.

In particular, in a second aspect thereof, the present invention is directed to a method for mounting the flush-mounted box. Preferably, the method provides for detecting the measurements of an opening to be made in the panel by means of abutments of the mounting member. In particular, this feature makes it possible to detect the relative distances between the panel opening and the screw passage holes for tightening the appendages. Preferably, the method provides for making the opening the panel, for example by means of a hole saw.

Preferably the perimeter wall has a substantially straight development along a direction extending from the free edge towards the bottom wall. Preferably the free edge is flush, or possibly recessed, with respect to an outer perimeter defined by the bottom wall.

Further characteristics and advantages of the invention will result more from the description of the flush-mounted box for electrical systems according to the invention, illustrated, by way of example and not limitation in the attached drawings in which:
- figure 1 illustrates a perspective view of the flush-mounted box according to the invention;
- figure 1A shows three different orientations of appendages of the flush-mounted box according to the invention;
- figures 2 and 2A show respectively a cross-sectional view of the box according to the invention in its panel-mounted configuration and a detail thereof;
- figure 3 illustrates a cross-sectional view of the box according to the invention in its alternative panel-mounted configuration;
- figure 4 shows a perspective view of the box according to the alternative configuration of figure 3;
- figure 5 is a cross-sectional view of the box at an intermediate mounting step;
- figure 6 illustrates a cross-sectional view of the box of figure 4.

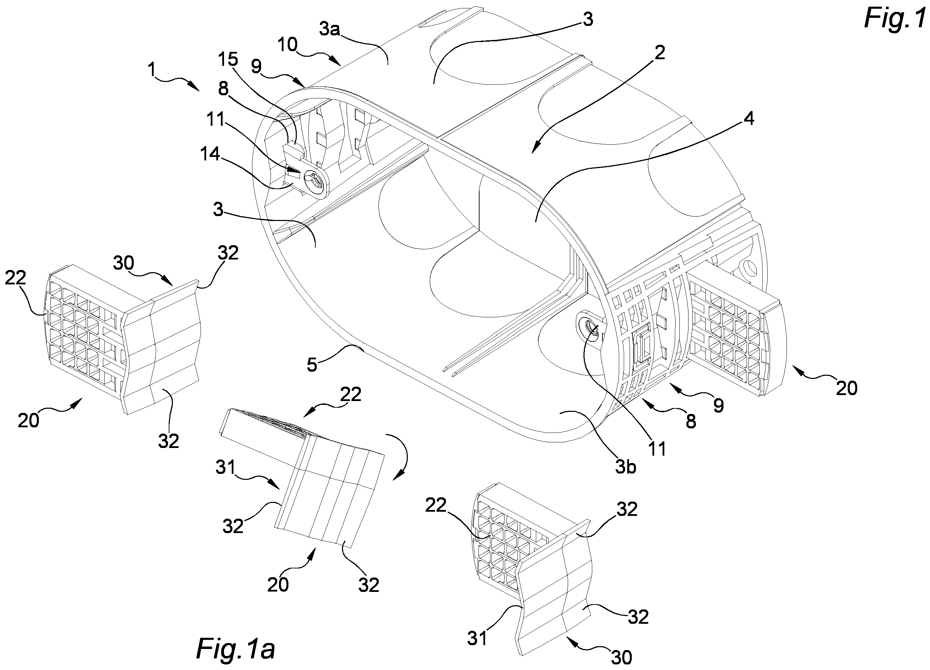

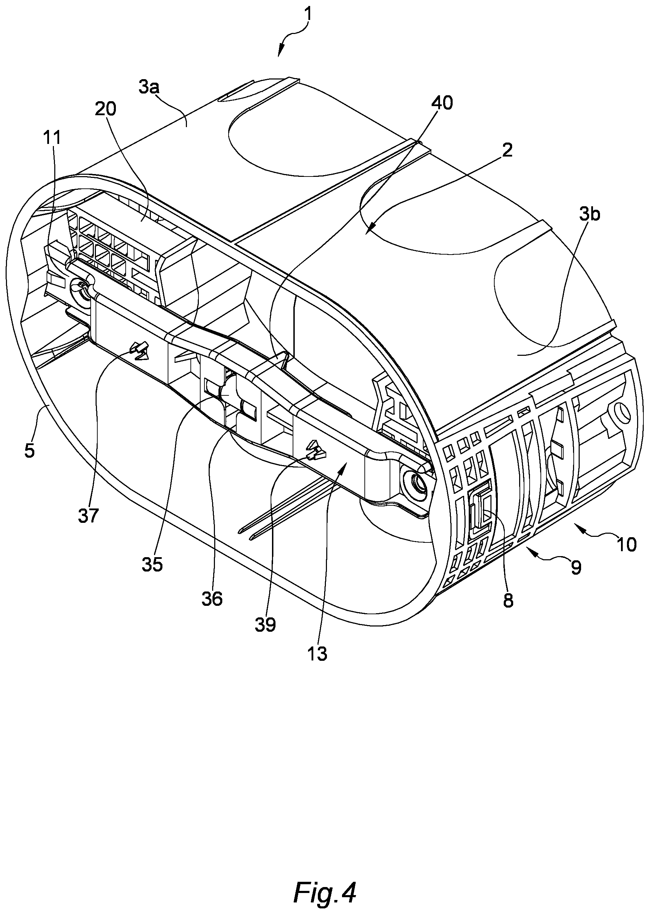

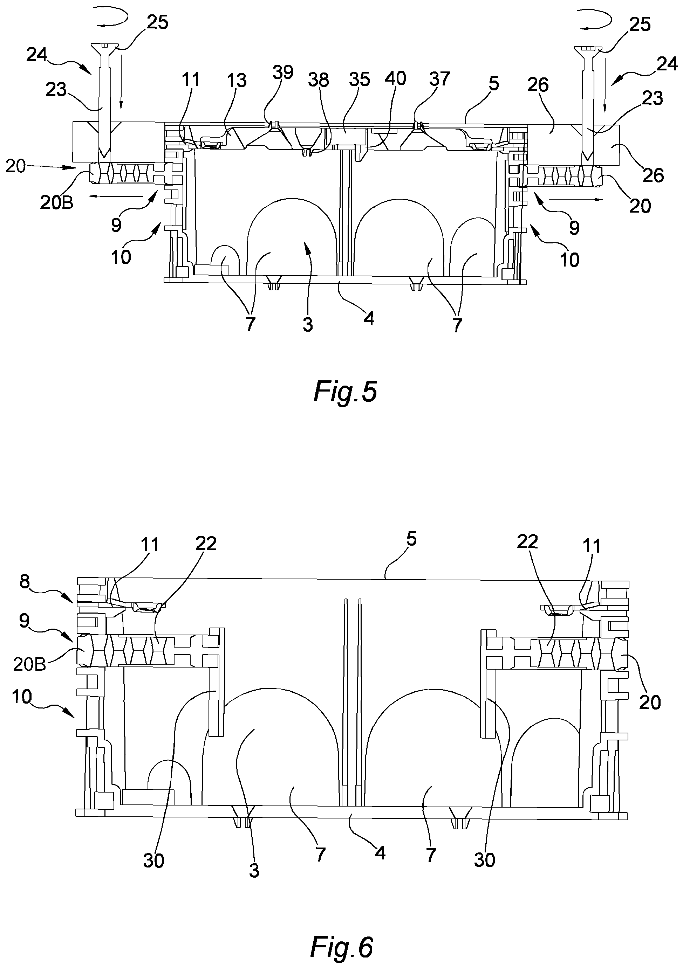

In figures 1 to 6, 1 denotes as a whole a flush-mounted box for electrical systems according to the present invention.

The box 1 comprises a box-like body 2 with a perimeter wall 3 and a bottom wall 4 opposed to a free edge 5. Preferably the box 1 is open on the opposite side to the bottom wall 4, i.e. at the free edge 5, and the perimeter wall 3 is flush-ended, on the opposite side to the bottom wall 4, i.e. devoid of any edge or perimeter frame protruding towards the outside of the box 1.

In other words, the perimeter wall 3 preferably has a substantially straight development along the direction from the free edge 5 to the bottom wall 4. According to a further aspect, the free edge 5 is advantageously flush, or possibly recessed with respect to the perimeter defined by the bottom wall 4.

In the configuration proposed by way of example, the box 1 is preferably ovoid in shape, with a perimeter wall 3 formed by two opposing substantially semi-cylindrical surfaces 3a, 3b connected by substantially planar surfaces. However, it is envisaged that the box 1 can assume different configurations, for example with a circular, square, rectangular or similar plan.

Fracturable portions 7 are obtained in the perimeter wall 3 and/or in the bottom wall 4 to facilitate the entry of cables and conduits into the box 1. Note that in some embodiments the fracturable portions 7 can also be made of rubber or other material different from the walls 3 and 4 and more generally the box.

First openings 8, second openings 9 and third openings 10 are obtained in the opposed semi-cylindrical surfaces 3a, 3b.

The first openings 8 are distal from the bottom wall 4 and serve to house and retain respective brackets 11 used both for removably applying a handle 13 to the box 1 and for the subsequent application, for example, of an insert holder, not depicted, or other closure of the box 1.

These brackets 11 preferably have a body 14 ribbed by a pair of wings 15 identifying, at one end, a root 16 which, engaging interlockingly in the opening 8 fixes the respective bracket 11 in the box 1.

On the side opposed to the root 16 there is obtained a hole 17 for coupling means configured for the temporary fixing of the handle 13 and the subsequent fixing of the insert holder support.

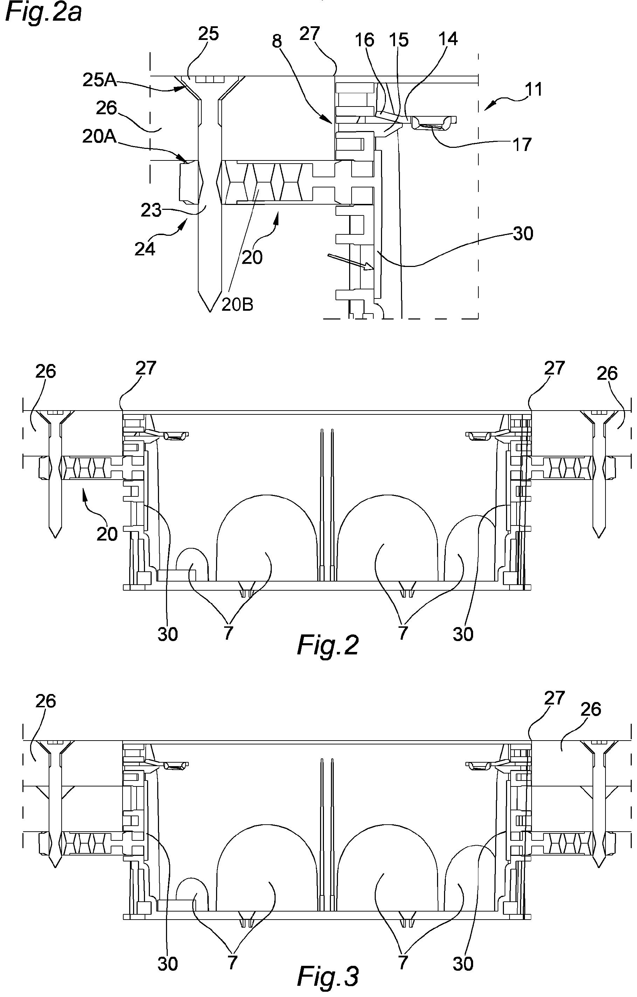

The second openings 9 and the third openings 10 are configured to alternatively accommodate a respective appendage 20 adapted to protrude, at least in a box mounting position, beyond the perimeter wall 3 of the box 1 so as to identify a respective dorsal abutment 20a of the box, better visible in figure 2a. As will be illustrated in further detail below, this dorsal abutment is determined by the rest of the appendage on the rear, or dorsal, face of the panel 26, that is, the face not visible.

In some embodiments, the appendages 20 each comprise a flat portion 20B, preferably each made in the form of a parallelepiped block arranged with a plurality of holes 22, preferably bi-conical in shape with a smaller base in common.

The holes 22 act as a screwing and lead-in seat for the threaded section 23 of the corresponding screw 24 having head 25. The heads 25 of the screws 24 act as a front abutment 25A for retaining the box 1 on the panel 26 in the opening 27.

Typically, the panel 26 is a plasterboard slab, or a wooden slab, in agglomerated wood or plywood. The opening 27 is made with suitable known tools, for example a hole saw. The second openings 9 and the third openings 10 are preferably spaced from the free edge 5 of the box 1 so that, considering the standardized thicknesses of the panels 26 used in construction, the third opening 10 is usable, for example, on double panels 26.

A screw 24 dimensioned in such a way that, in both mounting positions of the appendage 20, its threaded section 23 can engage one of the holes 22 will then be advantageously used.

Consequently, if one wants to install the box 1 flush with the panel 26 or preferably slightly recessed with respect to it, for example by 1 mm, the second opening 9 will be at a distance from the free edge 5 of the box 1 equal to the thickness of the panel 26 minus the desired recess and the third opening 10 will be spaced from the free edge 5 of the box 1 by a measure equal to twice the thickness of a panel 26 minus the desired recess.

Preferably the appendages 20 carry at one end of the flat portion intended to remain inside the box 1, a wing 30 having a portion 31 counter-formed with respect to the perimeter wall 3, advantageously in the area of the semi-circular portions 3a, 3b, in which the openings are formed.

In some embodiments, the portion 31 is comprised between two marginal portions 32 folded to match the profile of two ribs 33, or other raised shapes, protruding from the perimeter wall 3 towards the inside of the box 1. The conformation of the two marginal portions 32 and the ribs 33 may be different from that illustrated as long as it preferably allows a shape coupling between the respective surfaces of the wings 30 and the perimeter wall 3 of the box 1 to which these wings 30 are abutted during mounting.

Depending on the thickness of the panel 26 on which the box 1 is mounted, the appendages 20 will be rotated before inserting them into the respective second openings 9 or third openings 10 so as to present the screw 24 with a surface with holes 22, but on the opposite side.

The installation of the box 1 on the wall is preferably carried out according to the following methods.

The box 1 is preferably packaged with the handle 13 applied to the brackets 11 and the appendages 20 retained inside the box-like body 2. The handle 13 is preferably completed by a bubble level 35 snap-retained in a seat 36.

The handle 13 is preferably equipped with abutments positioned on it with predetermined distances to allow tracing the holes necessary for mounting the box 1. For example, the abutments 37 and 39 are positioned in such a way as to allow the centres of the holes for drilling the panel 26 to be traced by means of a hole saw of appropriate diameter. In some embodiments, further abutments 38, 40 can also be provided, arranged mutually spaced in such a way that, when the abutment 40 is resting on the drilling of the cup corresponding to the perimeter wall 3 of the box 1, the abutment 38 indicates the optimal position of the screw 24. Preferably the abutments 37, 38 and 39 are made in the form of pointed sterns such as to mark a footprint on the surface of the panel 26 when pressed against it. The abutment 40 can instead be made in the form of a shoulder.

Advantageously, the abutments 37, 39 and 38, 40 are formed on different, preferably opposite, sides of the handle 13 in such a way that the abutments 37, 39 in charge of tracing the centres of the holes do not interfere when the abutments 38, 40 are used for the positioning of the screw 24, and vice versa.

The box 1 can then be inserted frontally into the opening 27 in the panel 26 using the handle 13 for its accurate positioning.

The box 1 can be inserted into the opening 27 until the free edge 5 is recessed with respect to the free surface of the panel 26, until the openings 9 or 10 are below the opposite surface of the panel 26.

The appendages 20 are preferably retracted into the box-like body 2 and in the aforementioned position it is possible to press the appendages 20 to protrude towards the outside of the box 1 through the respective second openings 9 or third openings 10, depending on the thickness of the panel 26, to extract them close to the surface of the panel 26.

The box can then be moved in the direction of extraction via the handle 13 until the dorsal abutment 20A abuts the panel 26. Then the screws 24 are applied until the head 25 is embedded flush in the panel 26.

The handle 13 also allows the box to be retained during the application of the screws 24. By acting on the handle, in fact, it is possible to keep the appendages 20 stopped with the panel 26, counteracting the force applied following the insertion of the screw 24 in the relative hole 22.

It should also be noted that the bi-conical conformation of the holes 22 favours the blind lead-in of the threaded section of the corresponding screw 24, whether the appendage 20 is oriented as per single panels or double panels.

The invention thus solves the proposed problem while achieving multiple benefits. In fact, the box of the present invention allows a versatile and at the same time rapid installation, easily adapting to different panels and installation solutions.

## Claims

1. Flush-mounted box (1) for electrical systems intended for installation on panel walls, said flush-mounted box (1) comprising a box-like body (2) that includes a bottom (4) and a perimeter wall (3) having a front free edge (5), said front free edge (5) being opposed to an edge of said bottom (4), in said perimeter wall (3) there being provided at least one opening (9, 10), said flush-mounted box (1) further comprising at least one appendage (20) configured to be partially inserted in said at least one opening (9, 10) and to protrude reversibly, at least in a mounting position of said box (1), through said at least one opening (9, 10) beyond said perimeter wall (3) so as to identify a dorsal abutment (20A) of said flush-mounted box (1) on a panel (26) of the wall, wherein there is further provided a front abutment (25A) of said flush-mounted box on the panel, connected or connectable to said dorsal abutment, so as to retain the box on the panel (26), **characterized in that** the perimeter wall (3) of said box (1) is devoid of external perimeter flanging at said free edge (5), said front abutment (25A) including a screw (24) with enlarged head (25), said at least one appendage (20) being arranged to receive a threaded section (23) of said screw (24) for the purpose of tightening said panel (26) between the enlarged head (25) of the screw (24) and said at least one appendage (20).

2. Flush-mounted box (1) according to the preceding claim, comprising a pair of appendages (20).

3. Flush-mounted box (1) according to any one of the preceding claims, wherein said appendage (20) and said at least one opening (9, 10) being further configured in such a way that said appendage (20), when inserted in said at least one opening (9, 10), protrudes beyond said perimeter wall (3) entirely below said front free edge (5), so as to stop on said dorsal abutment (20A) a portion of the wall panel.

4. Flush-mounted box (1) according to any one of the preceding claims, wherein said perimeter wall (3) has a substantially straight development along a direction extending from said free edge (5) to said bottom wall (4), flush with said free edge (5), or possibly retracting, with respect to an outer perimeter defined by said bottom wall (4).

5. Flush-mounted box (1) according to any one of the preceding claims, comprising at least one pair of openings (9, 10) spaced along said perimeter wall (3), said at least one appendage being insertable, alternatively, in each opening of said pair.

6. Flush-mounted box (1) according to any one of the preceding claims, wherein in said perimeter wall (3) two pairs of openings (9, 10) are arranged differently spaced from said free edge (5) to alternatively receive the corresponding appendage (20) depending on the mounting thickness of said box (1).

7. Flush-mounted box (1) according to any one of the preceding claims, when dependent on claim 2, wherein each said appendage (20) comprises at least one, preferably a plurality, of lead-in seats (22) for said threaded section (23) of said screw (24).

8. Flush-mounted box (1) according to claim 7, wherein said lead-in seats (22) are arranged on opposed faces of said appendices (20), wherein said lead-in seats (22) being bi-conical in shape with a smaller base in common.

9. Flush-mounted box (1) according to any one of the preceding claims, when dependent on claim 2, wherein said openings (9, 10) are counter-shaped for a male-female coupling with respect to said appendages (20).

10. Flush-mounted box (1) according to any one of the preceding claims, when dependent on claim 2, wherein said appendages (20) comprise a flat portion (20B) and a wing (30) extending substantially perpendicular to said flat portion, said wing (30) being arranged so as to abut against said perimeter wall (3) when the corresponding said appendage (20) is inserted in said relative opening (9, 10).

11. Flush-mounted box (1) according to the preceding claim, wherein each of said appendages (20) comprises a single flat portion (20B) extending from said wing (30).

12. Flush-mounted box (1) according to any one of the preceding claims, comprising a pair of support members (11) housed in respective first openings (8) arranged distal with respect to said bottom edge (4) on mutually opposed sides of said perimeter wall (3) configured to house closing means of said box (1) and/or a handle (13) of said box (1).

13. Flush-mounted box (1) according to any one of the preceding claims, comprising a mounting member (13) removably housed on said free edge (5) to allow said box (1) to be housed on said panel (26).

14. Flush-mounted box (1) according to any preceding claim, wherein said mounting member (13) comprises a level (35) and a plurality of stops (37, 38, 39, 40) arranged in such a way as to allow the dimensioning of an opening (27) on said panel (26) to house said box-like body (2).

15. Method for mounting a flush-mounted box (1) according to any of the previous claims on a panel wall, comprising:
- Removing said at least one appendage (20) from said box-like body (2) or retracting said at least one appendage (20) within said box-like body (2);
- Inserting said box-like body (2) into an opening (27) formed in a panel (26) of the wall such that said free edge (5) is recessed with respect to the surface of said panel (26);
- Protruding said at least one appendage (20) through said at least one opening (9, 10) beyond said perimeter wall (3) in such a way as to identify said dorsal abutment;
- Moving said box-like body (2) in a direction of extraction from said opening (27) until obtaining an abutment between said dorsal abutment (20A) and said panel (26);
- Fixing said at least one appendage (20) to said panel (26) by means of a screw (24) in such a way as to identify said front abutment.
